(19) Europäisches Patentamt
European Patent Office
Office européen des brevets

(11) **EP 2 563 841 B1**

(12) **FASCICULE DE BREVET EUROPEEN**

(45) Date de publication et mention
de la délivrance du brevet:
**12.04.2017 Bulletin 2017/15**

(21) Numéro de dépôt: **11715549.9**

(22) Date de dépôt: **21.04.2011**

(51) Int Cl.:
*C08G 69/36* (2006.01)    *C08G 69/46* (2006.01)
*C08G 69/02* (2006.01)    *B29B 9/12* (2006.01)

(86) Numéro de dépôt international:
**PCT/EP2011/056409**

(87) Numéro de publication internationale:
**WO 2011/134883 (03.11.2011 Gazette 2011/44)**

(54) **PROCEDE DE FABRICATION DE POLYAMIDE**

VERFAHREN ZUR POLYAMIDHERSTELLUNG

PROCESS FOR PRODUCING POLYAMIDE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.04.2010 FR 1053371**

(43) Date de publication de la demande:
**06.03.2013 Bulletin 2013/10**

(73) Titulaire: **Rhodia Operations
93306 Aubervilliers (FR)**

(72) Inventeurs:
• **DI MARTINO, Audrey
F-69150 Decines (FR)**
• **CHARBONNEAUX, Thierry
F-69006 Lyon (FR)**

• **THIERRY, Jean-François
F-69340 Francheville (FR)**

(74) Mandataire: **Chatelan, Florence Anne et al
Rhodia Opérations
85, avenue des Frères Perret - BP 62
69192 Saint-Fons Cedex (FR)**

(56) Documents cités:
**US-A- 5 039 786    US-A- 5 723 569
US-A- 6 107 449    US-A1- 2005 209 436**

• **KRISTOFIC ET AL.: "Thermal properties of
poly-e-caprolactam and copolyamides based on
e-caprolactam", JOURNAL OF THERMAL
ANALYSIS AND CALORIMETRY, vol. 98, 27 juin
2009 (2009-06-27), pages 145-150, XP002612814,**

**Description**

La présente invention concerne un procédé de fabrication de polyamide.

L'invention concerne plus particulièrement un procédé de fabrication de polyamide à partir d'au moins un diacide et d'au moins une diamine, comprenant l'introduction de lactame à la fin ou après une étape de concentration d'une solution aqueuse de sel de diacide et diamine.

Les polyamides sont des polymères présentant un intérêt industriel et commercial considérable. Les polyamides thermoplastiques sont obtenus par condensation de deux types différents de monomères ou d'un seul type de monomères. Il est envisageable d'avoir plusieurs monomères différents dans un même type.

L'invention s'applique aux polyamides issus de deux types différents de monomères, comme par exemple le poly(hexaméthylène adipamide).

Classiquement, les polyamides sont préparés à partir d'au moins un monomère diacide et d'au moins un monomère diamine, en solution généralement dans l'eau.

Le diacide est un acide dicarboxylique. Le monomère diacide le plus courant est l'acide adipique.

Quant au monomère diamine, il s'agit généralement d'hexaméthylène diamine.

Outre l'acide adipique (AA) et l'hexaméthylène diamine (HMDA), les polyamides peuvent être issus d'autres monomères diamine ou diacide ou même des monomères amino-acides ou des lactames (jusqu'à 25% en moles). Ces autres monomères peuvent modifier par exemple le comportement à la cristallisation du polymère final.

Le procédé industriel le plus répandu de fabrication de polyamide à partir de deux monomères différents, un diacide et une diamine, consiste à former un sel entre le diacide et la diamine : par exemple l'adipate d'hexaméthylène diammonium, plus connu sous le nom de « sel N » ou sel Nylon. Ce sel est généralement mis en oeuvre en solution aqueuse. La solution de sel contient généralement des quantités stoechiométriques de diacides et diamines. La solution de ce « sel N », qui contient au moins 40 % en poids de « sel N », est généralement concentrée par évaporation d'eau. Le polyamide est obtenu par chauffage, à température et pression élevées, de cette solution de « sel N » concentrée, pour évaporer l'eau et activer la réaction de polymérisation, tout en maintenant le milieu à l'état liquide.

Après concentration, la solution de « sel N » contient généralement entre 55 et 90% en poids de sel.

Lors de la phase de polymérisation par chauffage à température et pression élevées de la solution, l'eau encore présente dans cette solution, ainsi que l'eau générée par la réaction de polymérisation sont éliminées.

Lorsque l'on fabrique un polyamide à partir de deux monomères différents, un diacide et une diamine, et que l'on souhaite également introduire des comonomères lactames, notamment en quantité importante, il est connu de les ajouter en mélange avec le sel de diacide et diamine de départ, avant le début du procédé de fabrication de polyamide. En effet il est connu de mélanger ces comonomères lactames à la solution de sel N par exemple, avant l'étape de concentration de cette solution.

Toutefois, le lactame, ajouté ainsi en mélange avec le sel de diacide et diamine de départ, peut être entraîné avec l'eau évaporée lors de l'étape de concentration de la solution de monomères, du fait de sa volatilité. Cet entraînement génère des pertes en lactame.

Pour compenser ces pertes, il est nécessaire d'introduire le comonomère lactame en excès par rapport à la quantité d'unités monomères issues du comonomère lactame souhaitée dans le polyamide final ; puisque une partie de ces comonomères introduite au départ sera perdue lors de l'étape de concentration de la solution de monomères.

Ces pertes en lactame sont d'autant plus élevées en valeur absolue que la quantité souhaitée d'unités monomères issues du comonomère lactame dans le polyamide final est élevée.

En conséquence l'excès de comonomères à mettre en oeuvre avant le début du procédé, pour compenser ces pertes élevées, sera lui aussi d'autant plus élevé en valeur absolue.

Ceci rend le procédé complexe et peu économique du point de vue des matières premières. De plus des effluents comprenant du lactame sont générés lors de l'étape de concentration de la solution de monomères, et la gestion de ces effluents est contraignante.

On cherche donc des solutions à ce problème des pertes en lactame, qui se pose plus particulièrement pour l'obtention de polyamides à partir de diacides et de diamines, dans lesquels on souhaite introduire des quantités élevées de comonomères lactames.

Pour résoudre ce problème, l'invention propose un procédé de fabrication de polyamide à partir d'au moins un diacide, d'au moins une diamine et d'au moins un lactame, comprenant les étapes suivantes :

    a) concentration par évaporation d'eau d'une solution aqueuse de sel de diacide et diamine obtenu par mélange d'au moins un diacide et d'au moins une diamine

    b) polymérisation sous pression de la solution aqueuse concentrée

    c) détente du milieu de polymérisation pour éliminer l'eau résiduelle par évaporation

    d) éventuellement maintien en température du polymère, sous pression atmosphérique ou réduite, pour obtenir le degré de polymérisation souhaité

e) éventuellement mise en forme du polymère obtenu,

caractérisé en ce que le lactame est introduit dans la solution ou le milieu de polymérisation, à la fin de l'étape a) ou après l'étape a) ;

et en ce que la proportion d'unités monomères issues du lactame dans le polymère final, en poids par rapport au poids de polymère final, est comprise entre 3 et 20%. Cette proportion est de préférence comprise entre 5 et 20%, encore plus préférentiellement comprise entre 10 et 15%.

Ce procédé, selon lequel le lactame est introduit à la fin ou après l'étape a) de concentration de la solution de monomères, permet de limiter voire de supprimer le problème de pertes en lactame lors de cette étape, qui existait dans les procédés antérieurs. Ceci rend le procédé plus simple et plus économique comme indiqué ci-dessus.

Par « poids de polymère final » on entend le poids total des unités monomères constituant la chaîne polymérique. Les unités monomères constituant la chaîne polymérique peuvent être par exemple les unités diacides carboxyliques, les unités diamines, les unités aminoacides.

Par «à la fin de l'étape a) », on entend « lorsque l'on a évaporé plus de 50% en poids, de préférence au moins 80% en poids, de l'eau que l'on souhaite évaporer lors de l'étape a) ».

Au sens de la présente invention, pour obtenir un polyamide à partir d'au moins un diacide, d'au moins une diamine et d'au moins un lactame dont la fraction d'unités monomères issues du lactame dans le polymère final, en poids par rapport au poids de polymère final (Y lactame), est comprise entre 0,03 et 0,2 (autrement dit une proportion entre 3 et 20%), la quantité massique de lactame à introduire ($Q_{\text{introd lactame}}$) est calculée de la façon générale suivante :

$$Q_{\text{introd lactame}} = Q_{\text{th lactame}} + Q_{\text{pertes lactame}}$$

avec

$Q_{\text{th lactame}} = m_{PA} \times Y_{\text{lactame}}$
$m_{PA}$ = Masse de polyamide à produire
$Y_{\text{lactame}}$ = Fraction massique d'unités monomères issues du lactame dans le polymère final

$Q_{\text{pertes lactame}}$ correspond aux pertes liées au procédé, notamment à l'évaporation du lactame au cours des phases d'élimination de l'eau de la solution de sel et de l'eau produite par la réaction de polycondensation du (ou des) diacide(s) et de la (ou des) diamine(s). Cette quantité peut par exemple être déterminée par un dosage chromatographique du lactame dans cette eau, récupérée après condensation. La quantité exacte de lactame à introduire peut ainsi être ajustée de manière à obtenir la fraction désirée, $Y_{\text{lactame}}$, d'unités monomères issues du lactame dans le polymère final.

En ce qui concerne la quantité de sel de diacide et diamine introduite, $Q_{\text{introd sel}}$, par rapport à $m_{PA}$, $Y_{\text{sel}}$, $M_{PA\ sel}$ et $M_{\text{sel}}$, ces deux dernières quantités étant respectivement la masse molaire des unités monomères issues du sel de diacide et diamine et la masse molaire du sel de diacide et diamine, on effectue le calcul suivant :

$$Q_{\text{introd sel}} = (m_{PA} \times Y_{\text{sel}} \times M_{\text{sel}}) / (M_{PA\ sel} \times F_{\text{sel}})$$

$m_{PA}$ = Masse de polyamide à produire
$Y_{\text{sel}}$ = Fraction massique d'unités monomères issues du sel dans le polymère final,
$F_{\text{sel}}$ = Fraction massique du sel dans la solution aqueuse

Avantageusement le lactame est introduit avant l'éventuelle étape d) qui est une étape de finition. Ainsi le copolymère est préparé dans de bonnes conditions. Le lactame peut par exemple être introduit au début de l'étape c) de détente.

La solution de sel de diacide et diamine est fabriquée selon un procédé connu de l'homme du métier. Elle peut être préparée par ajout du diacide, en particulier l'acide adipique, dans la diamine, en particulier l'hexaméthylène diamine, ou l'inverse, en milieu aqueux, en évacuant ou non la chaleur produite par la réaction de neutralisation.

Avantageusement la solution aqueuse de sel de diacide et diamine, avant sa concentration selon l'étape a), ne comprend pas de lactame.

L'étape a) de concentration du procédé de l'invention est généralement mise en oeuvre dans un « évaporateur » , appareillage connu de l'homme du métier. Il peut s'agir par exemple d'un évaporateur statique avec échangeur de chaleur interne de type serpentin, d'un évaporateur avec une boucle de recirculation sur échangeur externe etc.

La solution, lors de l'étape a), est avantageusement maintenue sous agitation. Cela permet une bonne homogénéisation de la solution. Les moyens d'agitation sont les moyens connus de l'homme du métier ; il peut s'agir par exemple d'une agitation mécanique, ou d'une recirculation par pompe ou par thermosiphon.

La solution introduite à l'étape a) peut être une solution préchauffée.

La solution de sel est avantageusement maintenue, dans l'étape a), à une température et à une pression suffisantes pour maintenir le milieu à l'état liquide et éviter toute apparition de phase solide.

La concentration pondérale en sel de la solution aqueuse de sel de diacide et de diamine, avant l'étape a), peut varier de 40 à 70%. Elle est avantageusement comprise entre 50 et 70%.

Par concentration pondérale en sel de la solution aqueuse, on entend concentration pondérale dans l'eau des espèces dissoutes.

Par espèces dissoutes, il faut comprendre l'ensemble des espèces diacides et diamines présentes dans le milieu sous forme libre ou ionisée (sel) ou autre, abstraction faite du lactame éventuellement présent.

L'étape a) de concentration est de préférence réalisée en maintenant la solution sous atmosphère exempte d'oxygène, de manière à éviter tout contact de la solution avec l'oxygène. Ceci est réalisé par exemple en mettant en oeuvre dans le procédé de l'invention un sel exempt d'oxygène dissous, ou en mettant en oeuvre une atmosphère de gaz inerte ou de vapeur d'eau générée par l'ébullition de la solution.

La concentration pondérale en sel de la solution aqueuse de sel de diacide et diamine, après l'étape a), est de préférence comprise entre 55 et 90%.

L'augmentation de la concentration pondérale en sel de la solution aqueuse de sel de diacide et diamine lors de l'étape a) de concentration est de préférence de 10 à 50 %, notamment de 15 à 40 % (exprimée en valeur absolue de concentration pondérale en sel de la solution aqueuse).

Selon un mode de réalisation particulier du procédé de l'invention, le lactame est introduit avant l'étape b) de polymérisation sous pression.

Le mélange issu de l'étape a), est de préférence transféré de l'évaporateur vers une enceinte réactionnelle dans laquelle se déroule l'étape b) de polymérisation avec élimination d'eau.

Le lactame peut par exemple être introduit dans l'évaporateur à la fin de l'étape a) de concentration ; dans l'évaporateur lorsque l'étape a) de concentration est achevée et avant que le mélange issu de l'étape a) ne soit transféré de l'évaporateur vers l'enceinte réactionnelle ; ou lors du transfert du mélange issu de l'étape a) de l'évaporateur vers l'enceinte réactionnelle.

Les étapes b) à d) sont mises en oeuvre, de préférence, dans un appareil ou plusieurs appareils successifs assurant les fonctions de polymérisation, détente et finition, selon les conditions habituelles du procédé de polycondensation. En particulier, l'étape b) est mise en oeuvre dans un « polymériseur ». Le « polymériseur » peut être un autoclave ou un réacteur continu. L'évaporateur peut alimenter plusieurs « polymériseurs ».

L'étape b) de polymérisation consiste en une polycondensation sous pression. La pression lors de cette étape b) est généralement comprise entre 1,5 et 2,5 MPa.

L'étape c) de détente consiste en une décompression du milieu de polymérisation pour éliminer l'eau résiduelle par évaporation.

Selon l'étape d), le polyamide peut ensuite être maintenu pendant un temps déterminé à une température de polymérisation sous pression atmosphérique ou réduite pour obtenir le degré de polymérisation désiré. L'étape d) est appelée finition.

Ces étapes sont connues de l'homme du métier et sont celles utilisées dans les procédés industriels classiques de fabrication de polyamide à partir d'une solution aqueuse de sel de diacide et de diamine.

Avantageusement, les appareillages du procédé de l'invention sont munis d'une isolation thermique pour limiter les échanges de chaleur avec le milieu extérieur et ainsi limiter les pertes de chaleur.

Le procédé de l'invention peut être continu ou discontinu.

Le procédé de l'invention peut être utilisé pour la fabrication de poly(hexaméthylène adipamide), à partir d'acide adipique comme monomère diacide et d'hexaméthylène diamine comme monomère diamine.

Comme monomère diacide, en plus de l'acide adipique, on peut citer également les acides glutarique, subérique, sébacique, dodécanedioïque, isophtalique, téréphtalique, azélaïque, pimélique, naphtalène dicarboxylique, 5-sulfoisophtalique par exemple. Il est possible d'utiliser un mélange de plusieurs monomères diacides.

Avantageusement le monomère diacide comprend au moins 80% en mole d'acide adipique.

Comme monomère diamine, en plus de l'hexaméthylène diamine, on peut citer également l'heptaméthylène diamine, la tétraméthylène diamine, la pentaméthylène diamine, l'octaméthylène diamine, la nonaméthylène diamine, la décaméthylène diamine, la méthyl-2 pentaméthylène diamine, l'undécaméthylène diamine, la dodécaméthylène diamine, la xylylène diamine, l'isophorone diamine. Il est possible d'utiliser un mélange de plusieurs monomères diamines.

Avantageusement le monomère diamine comprend au moins 80% en mole d'hexaméthylène diamine.

Comme comonomère lactame, en plus du caprolactame, on peut citer, le dodécanolactame, le butyrolactame, le valérolactame et le undécanolactame. Il est possible d'utiliser un mélange de plusieurs comonomères lactames.

Avantageusement le comonomère lactame comprend au moins 80% en mole de caprolactame.

Le comonomère lactame est généralement introduit sous forme de solution aqueuse ou sous forme fondue. Avantageusement la solution aqueuse de lactame comprend entre 60 et 80% en poids de lactame.

D'autres comonomères peuvent être introduits au cours du procédé de l'invention. On peut citer à titre d'exemple l'acide 6-aminohexanoïque, l'acide 5-aminopentanoïque, l'acide 7-aminoheptanoïque, l'acide 11-aminoundécanoïque.

Des additifs peuvent être introduits au cours du procédé de l'invention. On peut citer à titre d'exemples d'additifs des nucléants comme le talc, des matifiants comme le dioxyde de titane ou le sulfure de zinc, des stabilisants chaleur ou lumière, des agents bioactifs, des agents antisalissure, des catalyseurs, des limiteurs de chaîne etc. Ces additifs sont connus de l'homme du métier. Cette liste n'a aucun caractère exhaustif.

Le polymère est généralement ensuite extrudé ou mis en forme selon l'étape e) du procédé de l'invention.

Selon un mode de réalisation particulier du procédé de l'invention, le polymère est mis sous forme de granulés.

Ces granulés sont éventuellement post-condensés selon une méthode connue de l'homme du métier.

Ces granulés sont ensuite utilisés dans un grand nombre d'applications, notamment pour la fabrication de fils, fibres ou filaments, ou pour des mises en forme d'articles par moulage, injection, extrusion. Ils peuvent notamment être utilisés dans le domaine des plastiques techniques, généralement après une étape de formulation.

D'autres détails ou avantages de l'invention apparaîtront plus clairement à la vue des exemples donnés ci-dessous.

## EXEMPLES

Les concentrations d'antimousse et de caprolactame chargées sont exprimées respectivement en ppm et en % massique, pour respectivement $10^6$ et 100 parts de solution de sel N à 52% mise en oeuvre. La masse de solution de sel N mise en oeuvre dans l'exemple comparatif A et dans l'exemple 1 est la même ; de même les quantités de solution de sel N mises en oeuvre par unité de temps dans l'exemple comparatif B et dans l'exemple 2 sont les mêmes.

### Exemple comparatif A - Ajout de caprolactame avant l'étape de concentration dans un procédé discontinu

Un polyamide 6,6/6 est préparé à partir d'une solution aqueuse de Sel N à 52% en poids chargée dans un évaporateur chauffé à l'aide d'un serpentin interne et d'une double enveloppe externe, avec 11,8 ppm d'antimousse et 6,9 % en poids de caprolactame sous forme d'une solution aqueuse (à 75% en poids de caprolactame). La solution est chauffée jusqu'à 130°C sous une pression absolue de 0,15 MPa. A la fin de l'évaporation, la concentration de la solution est de 78% en poids. Cette solution est chauffée jusqu'à 160°C sans évaporation (phase de surchauffe). La solution est ensuite transférée dans un autoclave. L'autoclave est chauffé de façon à atteindre une pression autogène de 1,75 MPa. Cette pression est ensuite régulée à 1,75 MPa. La phase de polymérisation sous pression dure 65 min, puis la pression est réduite graduellement jusqu'à la pression atmosphérique. Le réacteur est maintenu sous pression réduite pendant 20 minutes et la température atteinte par la masse réactionnelle à la fin de cette étape est de 272°C. Puis le réacteur est mis sous une pression d'azote comprise entre 0,3 et 0,4 MPa pour pouvoir extruder le polymère sous forme de joncs, refroidis à l'eau et coupés de manière à obtenir des granulés.

Le polyamide 6,6/6 obtenu a une viscosité relative de 50 mesurée dans l'acide formique à 90%, à une concentration de 8,4% en poids, et une température de fusion de 240°C, correspondant à une composition de copolymère 66/6 de 88/12 (% en poids).

### Exemple 1 - Ajout de caprolactame après l'étape a) de concentration dans un procédé discontinu

Un polyamide 6,6/6 est préparé à partir d'une solution aqueuse de Sel N à 52% en poids chargée dans un évaporateur chauffé à l'aide d'un serpentin interne et d'une double enveloppe externe, avec 11,5 ppm d'antimousse. La solution est chauffée jusqu'à 130°C sous une pression absolue de 0,15 MPa. A la fin de l'évaporation, la concentration de la solution est de 78% en poids. Pendant la phase de surchauffe (chauffage jusqu'à 160°C sans évaporation), lorsque la température atteint 150°C, 6,5 % en poids de caprolactame sous forme d'une solution aqueuse (solution aqueuse identique à celle de l'exemple A comparatif) est ajouté à la solution. Cette solution est ensuite chauffée jusqu'à 160°C avant d'être transférée dans un autoclave. L'autoclave est chauffé de façon à atteindre une pression autogène de 1,75 MPa. Cette pression est ensuite régulée à 1,75 MPa. La phase de polymérisation sous pression dure 65 min, puis la pression est réduite graduellement jusqu'à la pression atmosphérique. Le réacteur est maintenu sous pression réduite pendant 20 minutes et la température atteinte par la masse réactionnelle à la fin de cette étape est de 272°C. Puis le réacteur est mis sous une pression d'azote comprise entre 0,3 et 0,4 MPa pour pouvoir extruder le polymère sous forme de joncs, refroidis à l'eau et coupés de manière à obtenir des granulés.

Le polyamide 6,6/6 obtenu a une viscosité relative de 50 mesurée dans l'acide formique à 90%, à une concentration de 8,4% en poids, et une température de fusion de 240°C, correspondant à une composition de copolymère 66/6 de 88/12 (% en poids).

L'exemple 1 comparé à l'exemple comparatif A montre que pour obtenir un copolyamide ayant une proportion donnée de motifs issus du caprolactame, on met en oeuvre une quantité moins importante de caprolactame dans le cas du procédé discontinu de l'invention (introduction de lactame après l'étape de concentration) que dans le cas d'un procédé discontinu tel que décrit dans l'art antérieur (introduction de lactame avant l'étape de concentration), ceci étant principalement lié aux pertes en caprolactame générées pendant l'étape de concentration dans le cas du procédé de l'art antérieur.

En effet, le procédé selon l'exemple 1 permet de diviser par 2 les pertes en caprolactame, comme le montre le calcul ci-dessous :

Pour obtenir 100 kg d'un copolyamide 66/6 de composition PA66 : 88 / PA6 : 12 et lorsqu'il n'y a pas de perte en caprolactame, il faut introduire :

- Quantité de Sel N à 52 % : (88 x 262,35)/(226,32 x 0,52) = 196,2 kg

    262,35 étant la masse molaire du Sel N
    226,32 étant la masse molaire d'une unité de PA66
    0,52 étant la fraction massique de Sel N dans la solution

- Quantité de Caprolactame : 12 kg,

soit un pourcentage en poids de caprolactame de 12/196,2 = 6,12 %
Dans l'exemple comparatif A, on a dû introduire 6,9 % de caprolactame, soit 0,78 % de pertes.
Dans l'exemple 1, on a dû introduire 6,5 % de caprolactame, soit 0,38% de pertes.

Les pertes en caprolactame ont donc été divisées par 0,78/0,38 ≈ 2.

## Exemple comparatif B - Ajout de caprolactame avant l'étape de concentration dans un procédé continu

Un polyamide 6,6/6 est préparé à partir d'une solution aqueuse de Sel N à 52% en poids, qui est préalablement mélangé dans une cuve agitée avec 2 ppm d'antimousse et 1,30% en poids de caprolactame sous forme fondue. Ce mélange alimente un évaporateur chauffé à l'aide d'un serpentin interne, où il est chauffé jusqu'à 113,5°C sous une pression absolue de 0,116 MPa. A la fin de l'évaporation, la concentration de la solution est de 66% en poids. Cette solution est ensuite chauffée par l'intermédiaire d'un fluide caloporteur jusqu'à 215°C par passage à travers un échangeur tubulaire. La solution alimente ensuite un réacteur d'axe horizontal partiellement rempli, où elle est chauffée jusqu'à 250°C sous une pression autogène régulée à 1,85 MPa par élimination de vapeur d'eau au travers d'une vanne de réglage. Le temps de séjour dans ce réacteur horizontal est de 60 min. La réaction de polycondensation s'y effectue et forme un prépolymère. Ce prépolymère est ensuite envoyé dans un flasher et chauffé jusqu'à 280°C en même temps que la pression est réduite à la pression atmosphérique. Un mélange de prépolymère et de vapeur d'eau se forme qui est dirigé vers un finisseur horizontal où se produit la séparation de la vapeur et du prépolymère et où la réaction continue. Ce finisseur est agité et chauffé à 280°C par un fluide caloporteur. Une pompe à engrenages transfère ensuite le polymère vers un bloc filière. Les joncs qui sortent de la filière sont refroidis et coupés à travers un système de granulation. Le polyamide 6,6/6 obtenu a une viscosité relative de 41 mesurée dans l'acide formique à 90%, à une concentration de 8,4% en poids, et une température de fusion de 257,5°C, correspondant à une composition de copolymère 66/6 de 97,5/2,5 (% en poids).

## Exemple comparatif 2 - Ajout de caprolactame après l'étape a) de concentration dans un procédé continu

Un polyamide 6,6/6 est préparé à partir d'une solution aqueuse de Sel N à 52% en poids, qui est préalablement mélangé dans une cuve agitée avec 2 ppm d'antimousse. Ce mélange alimente un évaporateur chauffé à l'aide d'un serpentin interne, où il est chauffé jusqu'à 113,5°C sous une pression absolue de 0,116 MPa. A la fin de l'évaporation, la concentration de la solution est de 66% en poids. Dans la ligne de transfert en aval de l'évaporateur, 1,19% en poids de caprolactame sous forme fondue est mélangé à la solution de sel N concentrée. Ce mélange est ensuite chauffé par l'intermédiaire d'un fluide caloporteur jusqu'à 215°C par passage à travers un échangeur tubulaire. La solution alimente ensuite un réacteur d'axe horizontal partiellement rempli, où elle est chauffée jusqu'à 250°C sous une pression autogène régulée à 1,85 MPa par élimination de vapeur d'eau au travers d'une vanne de réglage. Le temps de séjour dans ce réacteur horizontal est de 60 min. La réaction de polycondensation s'y effectue et forme un prépolymère. Ce prépolymère est ensuite envoyé dans un flasher et chauffé jusqu'à 280°C en même temps que la pression est réduite à la pression atmosphérique. Un mélange de prépolymère et de vapeur d'eau se forme qui est dirigé vers un finisseur horizontal où se produit la séparation de la vapeur et du prépolymère et où la réaction continue.

Ce finisseur est agité et chauffé à 280°C par un fluide caloporteur. Une pompe à engrenages transfère ensuite le polymère vers un bloc filière. Les joncs qui sortent de la filière sont refroidis et coupés à travers un système de granulation.

Le polyamide 6,6/6 obtenu a une viscosité relative de 41 mesurée dans l'acide formique à 90%, à une concentration de 8,4% en poids, et une température de fusion de 257,5°C, correspondant à une composition de copolymère 66/6 de 97,5/2,5 (% en poids).

L'exemple 2 comparé à l'exemple comparatif B montre que pour obtenir un copolyamide ayant une proportion donnée en motifs issus du caprolactame, on met en oeuvre une quantité moins importante de caprolactame dans le cas du procédé continu de l'invention (introduction de lactame après l'étape de concentration) que dans le cas d'un procédé continu tel que décrit dans l'art antérieur (introduction de lactame avant l'étape de concentration), ceci étant principalement lié aux pertes en caprolactame générées pendant l'étape de concentration dans le cas du procédé de l'art antérieur.

En effet, le procédé selon l'exemple 2 permet de diviser par 3,75 les pertes en caprolactame, comme le montre le calcul ci-dessous :

Pour obtenir 100 kg d'un copolyamide 66/6 de composition PA66 : 97,5 / PA6 : 2,5 et lorsqu'il n'y a pas de perte en caprolactame, il faut introduire :

- Quantité de Sel N à 52 % : (97,5 parts x 262,35)/(226,32 x 0,52) = 217,35 kg

262,35 étant la masse molaire du sel N
226,32 étant la masse molaire d'une unité de PA66
0,52 étant la fraction massique de Sel N dans la solution

- Quantité de Caprolactame : 2,5 kg,

soit un pourcentage en poids de caprolactame de 2,5/217,35 = 1,15 %

Dans l'exemple comparatif B, on a dû introduire 1,30 % de caprolactame, soit 0,15 % de pertes.

Dans l'exemple 2, on a dû introduire 1,19 % de caprolactame, soit 0,04 % de pertes.

Les pertes en caprolactame ont donc été divisées par 0,15/0,04 = 3,75.

## Revendications

1. Procédé de fabrication de polyamide à partir d'au moins un diacide, d'au moins une diamine et d'au moins un lactame, comprenant les étapes suivantes :

a) concentration par évaporation d'eau d'une solution aqueuse de sel de diacide et diamine obtenue par mélange d'au moins un diacide et d'au moins une diamine
b) polymérisation sous pression de la solution aqueuse concentrée
c) détente du milieu de polymérisation pour éliminer l'eau résiduelle par évaporation
d) éventuellement maintien en température du polymère, sous pression atmosphérique ou réduite, pour obtenir le degré de polymérisation souhaité
e) éventuellement mise en forme du polymère obtenu, **caractérisé en ce que** le lactame est introduit dans la solution ou le milieu de polymérisation, à la fin de l'étape a) ou après l'étape a) ;

et **en ce que** la proportion d'unités monomères issues du lactame dans le polymère final, en poids par rapport au poids de polymère final, est comprise entre 3 et 20 %.

2. Procédé selon la revendication 1, **caractérisé en ce que** le lactame est introduit avant l'étape d)

3. Procédé selon la revendication 2, **caractérisé en ce que** le lactame est introduit avant l'étape b).

4. Procédé selon la revendication 1 ou 2, **caractérisé en ce que** la solution aqueuse de sel de diacide et diamine, avant sa concentration selon l'étape a), ne comprend pas de lactame.

5. Procédé selon l'une des revendications précédentes, **caractérisé en ce que** la concentration pondérale en sel de la solution aqueuse de sel de diacide et diamine, avant l'étape a), est comprise entre 40 et 70%.

6. Procédé selon l'une des revendications précédentes, **caractérisé en ce que** la concentration pondérale en sel de la solution aqueuse de sel de diacide et diamine, après l'étape a), est comprise entre 55 et 90%.

7. Procédé selon l'une des revendications précédentes, **caractérisé en ce que** le mélange obtenu à l'issue de l'étape a) est transféré dans au moins un réacteur de polymérisation.

8. Procédé selon l'une des revendications précédentes, **caractérisé en ce que** lors de l'étape e), le polymère obtenu est mis sous forme de granulés.

9. Procédé selon l'une des revendications précédentes, **caractérisé en ce que** les monomères diacides sont choisis dans la liste comprenant les acides adipique, glutarique, subérique, sébacique, dodécanedioïque, isophtalique, téréphtalique, azélaïque, pimélique, naphtalène dicarboxylique, 5-sulfoisophtalique.

10. Procédé selon l'une des revendications précédentes, **caractérisé en ce que** les monomères diamines sont choisis dans la liste comprenant l'hexaméthylène diamine, l'heptaméthylène diamine, la tétraméthylène diamine, la pentaméthylène diamine, l'octaméthylène diamine, la nonaméthylène diamine, la décaméthylène diamine, la méthyl-2-pentaméthylène diamine, l'undécaméthylène diamine, la dodécaméthylène diamine, la xylylène diamine, l'isophorone diamine.

11. Procédé selon l'une des revendications précédentes, **caractérisé en ce que** les monomères lactames sont choisis dans la liste comprenant le caprolactame, le dodécanolactame, le butyrolactame, le valérolactame et le undécanolactame.

12. Procédé selon l'une des revendications précédentes, **caractérisé en ce que** le monomère diacide comprend au moins 80 % en mole d'acide adipique.

13. Procédé selon l'une des revendications précédentes, **caractérisé en ce que** le monomère diamine comprend au moins 80 % en mole d'hexaméthylène diamine.

14. Procédé selon l'une des revendications précédentes, **caractérisé en ce que** le comonomère lactame comprend au moins 80% en mole de caprolactame.

15. Procédé selon l'une des revendications précédentes, **caractérisé en ce que** la proportion d'unités monomères issues du lactame dans le polymère final, en poids par rapport au poids de polymère final, est comprise entre 10 et 15 %.

**Patentansprüche**

1. Verfahren zur Herstellung von Polyamid aus mindestens einer Disäure, mindestens einem Diamin und mindestens einem Lactam, das folgende Schritte umfasst:

a) Aufkonzentrieren einer wässrigen Lösung von durch Mischen mindestens einer Disäure und mindestens eines Diamins erhaltenem Salz von Disäure und Diamin durch Verdampfung von Wasser,
b) Polymerisieren der konzentrierten wässrigen Lösung unter Druck,
c) Entspannen des Polymerisationsmediums zur Entfernung des restlichen Wassers durch Verdampfung,
d) gegebenenfalls Halten des Polymers auf Temperatur bei Normaldruck oder vermindertem Druck zum Erhalt des gewünschten Polymerisationsgrads,
e) gegebenenfalls Formen des erhaltenen Polymers, **dadurch gekennzeichnet, dass** das Lactam am Ende von Schritt a) oder nach Schritt a) in die Lösung oder das Polymerisationsmedium eingetragen wird und dass der Gewichtsanteil an sich aus dem Lactam ergebenden Monomereinheiten in dem fertigen Polymer, bezogen auf das Gewicht des fertigen Polymers, zwischen 3 und 20% liegt.

2. Verfahren nach Anspruch 1, **dadurch gekennzeichnet, dass** das Lactam vor Schritt d) eingetragen wird.

3. Verfahren nach Anspruch 2, **dadurch gekennzeichnet, dass** das Lactam vor Schritt b) eingetragen wird.

4. Verfahren nach Anspruch 1 oder 2, **dadurch gekennzeichnet, dass** die wässrige Lösung von Salz von Disäure und Diamin vor dem Aufkonzentrieren gemäß Schritt a) kein Lactam umfasst.

5. Verfahren nach einem der vorhergehenden Ansprüche, **dadurch gekennzeichnet, dass** die gewichtsbezogene Konzentration von Salz in der wässrigen Lösung von Salz von Disäure und Diamin vor Schritt a) zwischen 40 und 70% liegt.

6. Verfahren nach einem der vorhergehenden Ansprüche, **dadurch gekennzeichnet, dass** die gewichtsbezogene Konzentration von Salz in der wässrigen Lösung von Salz von Disäure und Diamin nach Schritt a) zwischen 55 und 90% liegt.

7. Verfahren nach einem der vorhergehenden Ansprüche, **dadurch gekennzeichnet, dass** die am Ende von Schritt a) erhaltene Mischung in mindestens einen Polymerisationsreaktor überführt wird.

8. Verfahren nach einem der vorhergehenden Ansprüche, **dadurch gekennzeichnet, dass** das erhaltene Polymer in Schritt e) in Granulatform gebracht wird.

9. Verfahren nach einem der vorhergehenden Ansprüche, **dadurch gekennzeichnet, dass** die Disäure-Monomere aus der Liste bestehend aus Adipinsäure, Glutarsäure, Suberinsäure, Sebacinsäure, Dodecandisäure, Isophthalsäure, Terephthalsäure, Azelainsäure, Pimelinsäure, Naphthalindicarbonsäure und 5-Sulfoisophthalsäure ausgewählt werden.

10. Verfahren nach einem der vorhergehenden Ansprüche, **dadurch gekennzeichnet, dass** die Diamin-Monomere aus der Liste bestehend aus Hexamethylendiamin, Heptamethylendiamin, Tetramethylendiamin, Pentamethylendiamin, Octamethylendiamin, Nonamethylendiamin, Decamethylendiamin, 2-Methylpentamethylendiamin, Undecamethylendiamin, Dodecamethylendiamin, Xylylendiamin und Isophorondiamin ausgewählt werden.

11. Verfahren nach einem der vorhergehenden Ansprüche, **dadurch gekennzeichnet, dass** die Lactam-Monomere aus der Liste bestehend aus Caprolactam, Dodecanolactam, Butyrolactam, Valerolactam und Undecanolactam ausgewählt werden.

12. Verfahren nach einem der vorhergehenden Ansprüche, **dadurch gekennzeichnet, dass** das Disäure-Monomer mindestens 80 Mol-% Adipinsäure umfasst.

13. Verfahren nach einem der vorhergehenden Ansprüche, **dadurch gekennzeichnet, dass** das Diamin-Monomer mindestens 80 Mol-% Hexamethylendiamin umfasst.

14. Verfahren nach einem der vorhergehenden Ansprüche, **dadurch gekennzeichnet, dass** das Lactam-Comonomer mindestens 80 Mol-% Caprolactam umfasst.

15. Verfahren nach einem der vorhergehenden Ansprüche, **dadurch gekennzeichnet, dass** der Anteil an sich aus dem Lactam ergebenden Monomereinheiten in dem fertigen Polymer, bezogen auf das Gewicht des fertigen Polymers, zwischen 10 und 15% liegt.

**Claims**

1. Process for the manufacture of polyamide from at least one diacid, from at least one diamine and from at least one lactam, comprising the following stages:

   a) concentration, by evaporation of water, of an aqueous solution of salt of diacid and diamine obtained by mixing at least one diacid and at least one diamine,
   b) polymerization, under pressure, of the concentrated aqueous solution,
   c) reduction in pressure of the polymerization medium in order to remove the residual water by evaporation,
   d) optionally maintenance at temperature of the polymer, at atmospheric pressure or under reduced pressure, in order to obtain the desired degree of polymerization,

e) optionally forming of the polymer obtained,

**characterized in that** the lactam is introduced into the solution or the polymerization medium at the end of stage a) or after stage a);

and **in that** the proportion of monomer units resulting from the lactam in the final polymer, by weight with respect to the weight of final polymer, is between 3 and 20%.

2.  Process according to Claim 1, **characterized in that** the lactam is introduced before stage d).

3.  Process according to Claim 2, **characterized in that** the lactam is introduced before stage b).

4.  Process according to Claim 1 or 2, **characterized in that** the aqueous solution of salt of diacid and diamine, before it is concentrated according to stage a), does not comprise lactam.

5.  Process according to one of the preceding claims, **characterized in that** the concentration by weight of salt in the aqueous solution of salt of diacid and diamine, before stage a), is between 40 and 70%.

6.  Process according to one of the preceding claims, **characterized in that** the concentration by weight of salt in the aqueous solution of salt of diacid and diamine, after stage a), is between 55 and 90%.

7.  Process according to one of the preceding claims, **characterized in that** the mixture obtained on conclusion of stage a) is transferred into at least one polymerization reactor.

8.  Process according to one of the preceding claims, **characterized in that**, during stage e), the polymer obtained is formed into granules.

9.  Process according to one of the preceding claims, **characterized in that** the diacid monomers are chosen from the list consisting of adipic, glutaric, suberic, sebacic, dodecanedioic, isophthalic, terephthalic, azelaic, pimelic, naphthalenedicarboxylic and 5-sulphoisophthalic acids.

10. Process according to one of the preceding claims, **characterized in that** the diamine monomers are chosen from the list consisting of hexamethylenediamine, heptamethylenediamine, tetramethylenediamine, pentamethylenediamine, octamethylenediamine, nonamethylenediamine, decamethylenediamine, 2-methylpentamethylenediamine, undecamethylenediamine, dodecamethylenediamine, xylylenediamine and isophoronediamine.

11. Process according to one of the preceding claims, **characterized in that** the lactam monomers are chosen from the list consisting of caprolactam, dodecanolactam, butyrolactam, valerolactam and undecanolactam.

12. Process according to one of the preceding claims, **characterized in that** the diacid monomer comprises at least 80 mol% of adipic acid.

13. Process according to one of the preceding claims, **characterized in that** the diamine monomer comprises at least 80 mol% of hexamethylenediamine.

14. Process according to one of the preceding claims, **characterized in that** the lactam comonomer comprises at least 80 mol% of caprolactam.

15. Process according to one of the preceding claims, **characterized in that** the proportion of monomer units resulting from the lactam in the final polymer, by weight with respect to the weight of final polymer, is between 10 and 15%.